# EUROPÄISCHE PATENTANMELDUNG

(11) **EP 2 905 109 A1**
(43) Veröffentlichungstag der Anmeldung: **12.08.2015**
(21) Anmeldenummer: 14154247.2
(22) Anmeldetag: 07.02.2014
(51) Int. Cl.: B25B 13/06, B25B 13/48, F01D 5/02, F01D 25/28, F16B 39/02, B25B 21/00

(54) **Verfahren und Vorrichtung zum Sichern eines in einem Gewindesitz eingeschraubten Gewindeelements, Verfahren zum Einbauen wenigstens eines Wuchtgewichts einer Turbine sowie Turbine**

(71) Anmelder: Siemens Aktiengesellschaft, 80333 München (DE)
(72) Erfinder: Bentele, Stefan, 45473 Mülheim an der Ruhr (DE)

(57) **Zusammenfassung**

Die Erfindung betrifft ein Verfahren zum Sichern eines in einem Gewindesitz (2) eingeschraubten Gewindeelements (3), bei welchem zumindest das in dem Gewindesitz (2) eingeschraubte Gewindeelement (3) zumindest teilweise durch Deformationsmittel (14) eines Werkzeugs (10) derart plastisch deformiert wird, dass es anschließend verdrehgesichert in dem Gewindesitz (2) angeordnet ist, wobei das Werkzeug (10) axial vor dem Gewindeelement (3) platziert wird, indem ein Führungselement (12) des Werkzeugs (10) in eine Antriebsaufnahme (11) des Gewindeelements (3) axial eingesteckt wird, wobei die so axial vor dem Gewindeelement (3) platzierten Deformationsmittel (14) in Richtung des Gewindeelements (3) beschleunigt werden, und wobei sich die Deformationsmittel (14) gegenüber dem in die Antriebsaufnahme (11) eingesteckten Führungselement (12) derart relativ verlagern, dass zumindest der erste dem Werkzeug (10) zugewandte Gewindegang des Gewindeelements (3) und/oder des Gewindesitzes (2) durch die Deformationsmittel (14) deformiert wird, um das Gewindeelement (3) in dem Gewindesitz (2) zu sichern.

## Beschreibung

Die Erfindung betrifft einerseits ein Verfahren zum Sichern eines in einem Gewindesitz eingeschraubten Gewindeelements, bei welchem zumindest das in dem Gewindesitz eingeschraubte Gewindeelement zumindest teilweise durch Deformationsmittel eines Werkzeugs derart plastisch deformiert wird, dass es anschließend verdrehgesichert in dem Gewindesitz angeordnet ist.

Die Erfindung betrifft andererseits ein Verfahren zum Einbauen wenigstens eines Wuchtgewichts einer Turbine, insbesondere einer Dampfturbine, bei welchem das wenigstens eine Wuchtgewicht mittels eines als Montageschraube ausgestalteten Gewindeelements festgelegt wird, wobei das Gewindeelement bei einem unter Betriebsbedingungen durchgeführten finalen Wuchtungsprozess mit einem definierten Drehmoment in einem Gewindesitz angezogen wird.

Die Erfindung betrifft des Weiteren eine Vorrichtung zum Sichern eines in einem Gewindesitz eingeschraubten Gewindeelements mit einem Werkzeug zum plastischen Deformieren zumindest des Gewindeelements, wobei das Werkzeug einen Tragkörper aufweist.

Die Erfindung betrifft außerdem eine Turbine, insbesondere eine Dampfturbine, mit wenigstens einem umlaufenden und Turbinenschaufeln halternden Rotor und mit Wuchtgewichten zum Wuchten des umlaufenden Rotors, bei welcher die Wuchtgewichte mittels einer als Gewindeelement ausgestalteten Montageschraube festgelegt sind, und bei welcher das Gewindeelement in seinem Gewindesitz durch eine Verliersicherung gesichert ist.

Aus dem Stand der Technik ist es bekannt, umlaufende Turbinenschaufeln bzw. einen diesbezüglichen Turbinenrotor einer Turbine mithilfe von Wuchtgewichten zu wuchten, so dass eine hiermit ausgerüstete Turbinenwelle der Turbine im Betrieb möglichst vibrationsarm rotieren kann und somit eine Rotation der Turbinenwelle durch von einer Anordnung aus Turbinenrotor und daran angeordneten Turbinenschaufeln hervorgerufenen Unwuchten möglichst nicht negativ beeinträchtigt wird. Ein diesbezügliches Auswuchten erfolgt oftmals noch im Werk während des Zusammenbaus der Turbine in einer Wuchtanlage mithilfe von Wuchtgewichten. Die Wuchtgewichte werden meistens in hierfür vorgesehene Ringnuten an dem Turbinenrotor platziert und jeweils mit wenigstens einer Montageschraube an Ort und Stelle in diesen Ringnuten fixiert. Diese Montageschrauben können im Werk beispielsweise durch Verstemmen in ihrem jeweiligen Gewindesitz gegen ein unbeabsichtigtes Lösen gesichert werden, so dass die Wuchtgewichte insgesamt verliersicher angeordnet sind. Nach einem Einbau von Wuchtgewichten bei einem finalen Wuchtungsvorgang in einem Kraftwerk vor Ort unter Betriebsbedingungen können die eingesetzten Wuchtgewichte jedoch lediglich mit einem definierten Drehmoment angezogen werden. Das zusätzliche Sichern von hierfür vorgesehenen Montageschrauben gegen ein unbeabsichtigtes Lösen, beispielweise durch ein Verstemmen innerhalb des Gewindesitzes, ist aufgrund der schlechten Zugänglichkeit meist nicht mehr oder nur sehr aufwendig und unzureichend möglich. Diese schlechte Zugänglichkeit ergibt sich dadurch, dass die Wuchtgewichte ca. 650 mm von einer Zugangsstelle entfernt angeordnet sind und nur durch eine Zugangsbohrung mit einem Durchmesser von ca. 80 mm oder dergleichen zu erreichen sind. Deshalb werden diese Wuchtgewichte bzw. deren Montageschrauben nicht zusätzlich gesichert, wodurch die Gefahr besteht, dass sich die derart ungesicherten Montageschrauben leichter lösen und die Wuchtgewichte infolgedessen aus ihrer vorgesehenen Position heraus bewegen können. Dies hat zur Folge, dass die Turbinenwelle unsauberer umläuft. Dies wiederum kann zu einem erhöhten Verschließ insgesamt und zu vorzeitigen Wartungsarbeiten und damit zum Stillstand der Turbine führen.

Es ist Aufgabe der Erfindung, zumindest die vorstehend genannten Nachteile zu überwinden.

Die Aufgabe der Erfindung wird von einem Verfahren zum Sichern eines in einem Gewindesitz eingeschraubten Gewindeelements gelöst, bei welchem zumindest das in dem Gewindesitz eingeschraubte Gewindeelement zumindest teilweise durch Deformationsmittel eines Werkzeugs derart plastisch deformiert wird, dass es anschließend verdrehgesichert in dem Gewindesitz angeordnet ist, wobei das Werkzeug axial vor dem Gewindeelement platziert wird, indem ein Führungselement des Werkzeugs in eine Antriebsaufnahme des Gewindeelements axial eingesteckt wird, wobei die so axial vor dem Gewindeelement platzierten Deformationsmittel in Richtung des Gewindeelements beschleunigt werden, und wobei sich die Deformationsmittel gegenüber dem in die Antriebsaufnahme eingesteckten Führungselement derart relativ verlagern, dass zumindest der erste dem Werkzeug zugewandte Gewindegang des Gewindeelements und/oder des Gewindesitzes durch die Deformationsmittel deformiert wird, um das Gewindeelement in dem Gewindesitz zu sichern.

Vorteilhafterweise wird das zur Deformation vorgesehene Werkzeug durch das in die Antriebsaufnahme des Gewindeelements eingesteckte Führungselement derart gegenüber dem Gewindeelement positioniert, dass speziell der Gewindesitz trotz einer schlechten Zugänglichkeit aus einer ansonsten kritischen Entfernung zielgerichteter durch die Deformationsmittel plastisch deformiert werden kann, wodurch eine Verdrehsicherung des Gewindeelement zuverlässig gewährleistet ist. Hierzu können die Deformationsmittel gegenüber dem Führungselement anschließend relativ verlagert werden.

Aufgrund des Effektes, dass sich durch das vorliegende Verfahren eine gute Deformierung des Gewindesitzes und/oder des Gewindeelements aus größerer Distanz selbst an einer nur schlecht zugänglichen Stelle erzielt werden kann, ist es vorteilhaft, wenn das Gewindeelement vor dem Sichern als Montageschraube in ein Wuchtgewicht einer Turbinenanordnung eingeschraubt wird, um das Wuchtgewicht beispielsweise in einer Ringnut eines Turbinenrotors betriebssicher festgelegen zu können.

Vorteilhafterweise kann das Werkzeug hierbei problemlos durch eine Zugangsbohrung, die beispielweise mehr als 500 mm lang ist und lediglich einen Durchmesser von weniger als 100 mm aufweist, hindurch geführt werden, bevor das Gewindeelement und/oder bevorzugt der Gewindesitz mittels des Werkzeug in geeigneter Weise plastisch deformiert wird.

Insofern kann mit vorliegender Erfindung eine sehr gute Sicherung eines Gewindeelements, wie etwa einer Montageschraube oder dergleichen, innerhalb eines tief in einer Turbinenanordnung liegenden Gewindesitzes erzielt werden.

Somit ist es vorteilhaft, wenn mittels des Gewindeelements ein Wuchtgewicht einer Turbine, insbesondere einer Dampfturbine, gegen ein unbeabsichtigtes Verlagern aus einer vorgesehenen Position gesichert wird.

Insofern wird die Aufgabe der Erfindung auch von einem Verfahren zum Einbauen wenigstens eines Wuchtgewichts einer Turbine, insbesondere einer Dampfturbine, bei welchem das wenigstens eine Wuchtgewicht mittels eines als Montageschraube ausgestalteten Gewindeelements festgelegt wird, wobei das Gewindeelement bei einem unter Betriebsbedingungen durchgeführten finalen Wuchtungsprozess mit einem definierten Drehmoment in einem Gewindesitz angezogen wird, wobei zumindest das in dem Gewindesitz eingeschraubte Gewindeelement zumindest teilweise durch Deformationsmittel eines Werkzeugs derart plastisch deformiert wird, dass es anschließend verdrehgesichert in dem Gewindesitz angeordnet ist, wobei das Werkzeug axial vor dem Gewindeelement platziert wird, indem ein Führungselement des Werkzeugs in eine Antriebsaufnahme des Gewindeelements axial eingesteckt wird, wobei die so axial vor dem Gewindeelement platzierten Deformationsmittel in Richtung des Gewindeelements beschleunigt werden, und wobei sich die Deformationsmittel gegenüber dem in die Antriebsaufnahme eingesteckten Führungselement derart relativ verlagern, dass zumindest der erste dem Werkzeug zugewandte Gewindegang des Gewindeelements und/oder des Gewindesitzes durch die Deformationsmittel deformiert wird, um das Gewindeelement in dem Gewindesitz zu sichern.

Insbesondere die meist schlecht und oftmals nur durch eine tiefe Zugangsbohrung zugänglichen Montageschrauben der Wuchtgewichte und deren Gewindesitze können durch das erfindungsgemäße Verfahren nicht nur sehr gut erreicht sondern darüber hinaus auch derart präzise plastisch deformiert werden, dass sie sich im Nachhinein auch wieder problemlos lösen lassen. Und dies ohne, dass hierbei die Gefahr besteht, dass sie durch eine zu große Kraftausübung beispielsweise abscheren.

Hierzu wird durch Aufschlagen der Deformationsmittel auf das Gewindeelement und/oder dem in dem Wuchtgewicht befindlichen Gewindesitz idealerweise lediglich der ersten Gewindegang des Gewindeelements und/oder bevorzugt des Gewindesitzes plastisch deformiert, um zumindest das Gewindeelement bzw. die Montageschraube, welche bevorzugt etwa 1 mm unterhalb der Oberfläche des Wuchtgewichts sitzt, zu deformieren. Vorzugsweise wird hierbei insbesondere das Wuchtgewicht plastisch deformiert, da in diesem der Gewindesitz eingearbeitet ist.

Demzufolge wird bevorzugt zumindest der in dem Wuchtgewicht eingebrachte erste Gewindegang plastisch deformiert.

Zweckmäßigerweise wird das Werkzeug durch eine Zugangsbohrung einer Turbinenanordnung hindurch bis an das Gewindeelement herangeführt, um das Gewindeelement und/oder den Gewindesitz plastisch zu deformieren.

Die Aufgabe der Erfindung wird darüber hinaus auch von einer Vorrichtung zum Sichern eines in einem Gewindesitz eingeschraubten Gewindeelements mit einem Werkzeug zum Deformieren zumindest des Gewindeelements gelöst, wobei das Werkzeug einen Tragkörper aufweist, an welchem einerseits ein in das Gewindeelement einsteckbares Führungselement und andererseits Deformationsmittel zum plastischen Deformieren des Gewindeelements und/oder des Gewindesitzes angeordnet sind, und wobei das Führungselement gegenüber den Deformationsmitteln relativ verlagerbar an dem Tragkörper gelagert ist.

Die derart ausgestaltete Vorrichtung eignet sich besonders gut zur Durchführung eines der hier beschriebenen Verfahren und deren vorteilhaften Weiterbildungen.

Somit kann die vorliegende Vorrichtung auch besonders gut zur finalen Endmontage wenigstens eines Wuchtelements einer Turbine, insbesondere einer Dampfturbine, eingesetzt werden.

Eine besonders vorteilhafte Verfahrensvariante sieht vor, dass das Führungselement in eine Antriebsaufnahme des Gewindeelements derart eingesteckt wird, dass das Deformationsmittel zentrisch gegenüber dem Gewindeelement ausgerichtet ist. Hierdurch kann die plastische Deformation besonders präzisiert vorgenommen werden.

Das Führungselement des Werkzeugs ist hierbei bevorzugt genau auf das verwendete Gewindeelement bzw. die Montageschraube abgestimmt. Handelt es sich bei dem Gewindeelement bzw. der Montageschraube etwa um eine Schlitz- oder Kreuzschlitzschraube mit einer entsprechend ausgebildeten Antriebsaufnahme, ist es vorteilhaft, wenn das Führungselement ein hierzu kompatibles Schlitz- oder Kreuzschlitzeinsteckteil umfasst, damit es in die jeweilige Antriebsaufnahme eingesteckt werden kann.

In der Regel ist eine Montageschraube in Form einer Innensechskantschraube bzw. einer Madenschraube mit Innensechskant-Antriebsaufnahme verwirklicht, um etwa ansatzlos in ein Wuchtgewicht eingeschraubt werden zu können. Demzufolge ist es vorteilhaft, wenn das Führungselement ein Innensechskanteinsteckteil aufweist.

Ein Deformieren kann vorliegend wesentlich präzisiert werden, wenn das Führungselement und die Deformationsmittel translatorisch zueinander bewegt werden können. Deshalb ist es vorteilhaft, wenn das Führungselement entlang der Mittelachse des Werkzeugs linear verschieblich innerhalb des Tragkörpers gelagert ist. Hierdurch kann sich das Führungselement in den Tragkörper hinein verlagern, wenn die Deformationsmittel auf das Gewindeelement bzw. die Montageschraube oder bevorzugt auf das Wuchtgewicht aufgesetzt oder aufgeschlagen werden.

Damit das Führungselement vorteilhaft in die Antriebsaufnahme eingesteckt werden kann, ist es vorteilhaft, wenn das Führungselement kopfseitig des Werkzeugs zumindest temporär über die Deformationsmittel hinausragend angeordnet ist.

Ist das Führungselement federvorgespannt innerhalb des Tragkörpers gelagert, kann es aus diesem Tragkörper konstruktiv einfach wieder hieraus gedrückt werden, nachdem es zum Zweck eines plastischen Deformationsvorgangs kurzzeitig in den Tragkörper hineinverlagert wurde.

Das Führungselement kann schneller in die Antriebsaufnahme des Gewindeelements bzw. der Montageschraube eingesteckt werden, wenn das Führungselement um die Mittelachse des Werkzeugs herum verdrehsicher angeordnet ist.

Eine diesbezügliche Verdrehsicherung kann konstruktiv vielfältig umgesetzt werden. Baulich besonders einfach kann dies realisiert werden, wenn an dem Führungselement ein Verdrehsicherungsbolzen angeordnet ist, welcher radial in einer sich in Richtung der Mittellängsachse des Werkzeugs erstreckende Führungsnut des Tragkörpers hineinragend geführt ist.

Um insbesondere den Gewindesitz und/oder das Gewindeelement bzw. die Montageschraube in geeigneter Weise deformieren zu können, können die Deformationsmittel unterschiedlicher Gestalt sein.

Besonders vorteilhaft ist es, wenn die Deformationsmittel eine Vielzahl an konisch ausgestalteten Deformationsspitzen umfassen.

Vorzugsweise sind mehrere solcher Deformationsspitzen konzentrisch um das Führungselement herum angeordnet.

Es versteht sich, dass die Deformationsmittel ausreichend hart ausgebildet sein müssen, um dauerhaft einsatzbereit zu sein. Somit ist es vorteilhaft, wenn die Deformationsmittel gehärtete Deformationsspitzen umfassen.

Die Vielzahl an Deformationsspitzen kann baulich einfach durch ein ringförmiges gehärtetes Kronenelement, welches an sich Deformationsspitzen ausbildet, bereitgestellt werden.

Das Werkzeug selbst kann dann hervorragend eingesetzt werden, wenn es durch eine tiefere bzw. baulich länger ausgeführte Zugangsbohrung hindurch betätigt werden kann. Allein schon aus diesem Grund ist es vorteilhaft, wenn das Werkzeug eine Aufnahme für einen Schlagarm aufweist, die an einem dem Führungselement abgewandten Ende des Tragkörpers angeordnet ist.

Mittels des Schlagarms kann eine manuell oder eine durch einen pneumatisch steuerbaren Einzelschlaghammer aufgebrachte Schlagkraft problemlos durch die Zugangsbohrung hindurch auf das Werkzeug übertragen werden.

Die Vorrichtung kann flexibler eingesetzt werden, wenn sie längenverstellbar ist. Eine solche Längeneinstellung kann beispielsweise mittels des bevorzugt auswechselbaren Schlagarms erfolgen. Entweder ist dieser an sich in seiner Länge verstellbar. Oder an dem Werkzeug können je nach Einsatzbedingungen wahlweise unterschiedlich lang ausgebildete Schlagarme angebracht werden.

Um das Gewindeelement bzw. die Montageschraube wieder gut aus ihrem jeweiligen Gewindesitz lösen zu können, ist es vorteilhaft, wenn das Gewindeelement und/oder der Gewindesitz lediglich derart deformiert werden, dass es wieder aus dem Gewindesitz gelöst werden kann.

Ein derartiges Lösen gelingt ausreichend gut, wenn das Gewinde des Gewindeelements und/oder des Gewindesitzes weniger als 25%, vorzugsweise weniger als 20%, plastisch deformiert wird. Bisher wurde eine Sicherung der Wuchtgewichte bei der Wuchtung in der Wuchtanlage durch Zerstören von mehr als 30% des Gewindes der Montageschraube als nicht mehr lösbare Verliersicherung ausgeführt. Oder es wurde bei der Wuchtung im Kraftwerk auf eine diesbezügliche Sicherung verzichtet.

Die Aufgabe der Erfindung wird auch von einer Turbine, insbesondere einer Dampfturbine, mit wenigstens einem umlaufenden und Turbinenschaufeln halternden Rotor und mit Wuchtgewichten zum Wuchten des umlaufenden Rotors gelöst, bei welcher die Wuchtgewichte mittels einer als Gewindeelement ausgestalteten Montageschraube festgelegt sind, und bei welcher das Gewindeelement in seinem Gewindesitz durch eine Verliersicherung gesichert ist, wobei die Verliersicherung durch eine plastische Deformation des Gewindeelements und/oder des Gewindesitzes derart erzeugt ist, dass lediglich ein erster Gewindegang des Gewindes des Gewindeelements und/oder des Gewindesitzes plastisch deformiert ist, so dass das Gewindeelement wieder aus seinem Gewindesitz herausgeschraubt werden kann, um das Wuchtgewicht verlagern oder entnehmen zu können.

Durch eine derart erzeugte Verliersicherung kann die Ausfallwahrscheinlichkeit der Turbine aufgrund eines sich unbeabsichtigt lösenden Wuchtgewichts signifikant reduziert werden.

Besonders vorteilhaft ist es, dass das Gewindeelement bzw. die Montageschraube und/oder der Gewindesitz hierbei nur derart plastisch deformiert ist, dass es bzw. sie im Bedarfsfall wieder gelöst werden kann. Bevorzugt ist deshalb nur ein einziger Gewindegang des Gewindeelements bzw. der Montageschraube und/oder des Gewindesitzes plastisch deformiert. Und insbesondere dies kann mit der hier beschriebenen Vorrichtung hervorragend gewährleistet werden.

Eine gute Lösbarkeit durch eine tiefere bzw. baulich länger ausgeführte Zugangsbohrung hindurch kann insofern sichergestellt werden, wenn das Gewinde des Gewindeelements und/oder des Gewindesitzes weniger als 25%, vorzugsweise weniger als 20%, durch die plastische Deformation zerstört ist.

Im Folgenden wird eine bevorzugte Ausführungsform einer erfindungsgemäßen Vorrichtung zum Montieren eines Wuchtgewichts an einer Dampfturbine sowie eine Anordnung des Wuchtgewichts in einer Ringnut eines Dampfturbinenrotors der Dampfturbine anhand der beigefügten schematischen Zeichnungen erläutert.

Es zeigt:
- Fig. 1: schematisch eine Ansicht einer Vorrichtung insbesondere zur finalen Endmontage eines Wuchtgewichts an einer Dampfturbine mit einem Werkzeug zum plastischen Deformieren eines Gewindes eines Gewindesitzes einer Montageschraube des Wuchtgewichts,
- Fig. 2: schematisch eine Lageansicht des in einer Ringnut eines Dampfturbinenrotors endmontierten Wuchtgewichts, und
- Fig. 3: schematisch eine Aufsicht des in der Ringnut des Dampfturbinenrotors endmontierten Wuchtgewichts aus der Figur 2.

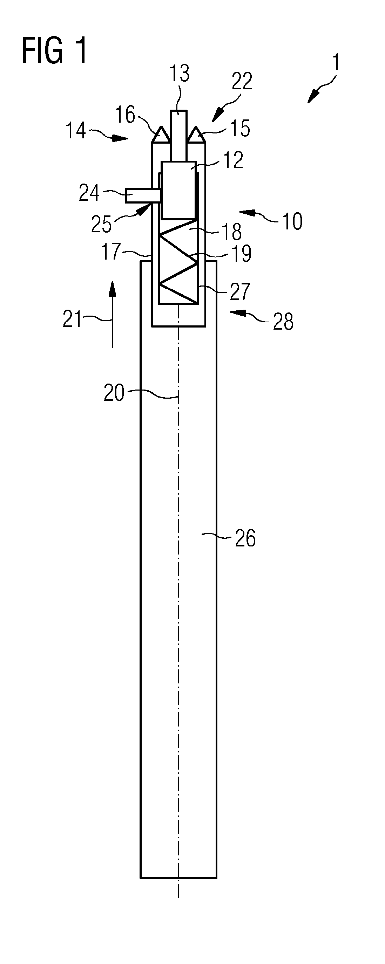

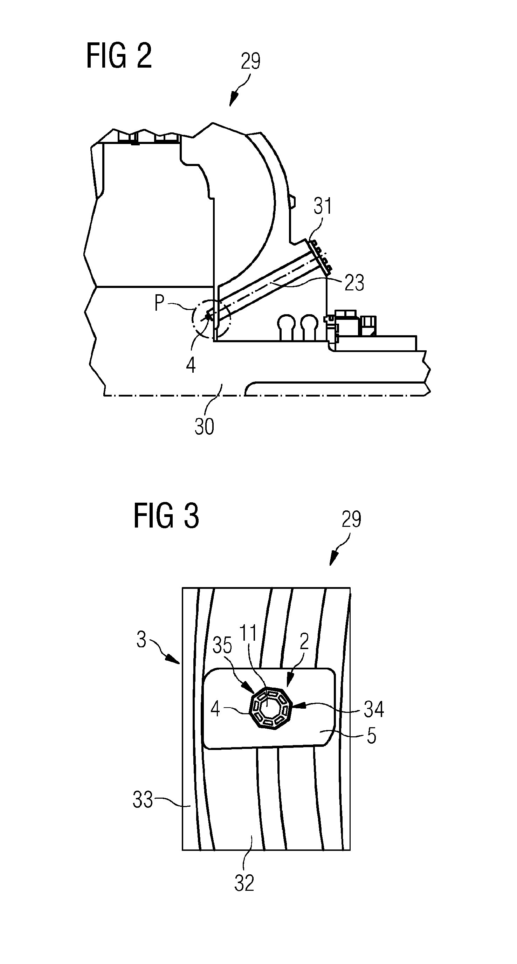

Die in der Figur 1 gezeigte Vorrichtung 1 ist in diesem Ausführungsbeispiel derart ausgestaltet, dass sie zum Sichern eines in einem Gewindesitz 2 (siehe Figuren 2 und 3) eingeschraubten Gewindeelements 3, welches hier in Gestalt einer Montageschraube 4 eines Wuchtgewichts 5 realisiert ist, vorgesehen ist.

Hierzu ist die Vorrichtung 1 mit einem Werkzeug 10 ausgerüstet, mittels welchem zumindest der in das Wuchtgewicht 5 eingebrachte Gewindesitz 2 und zweckmäßigerweise auch die Montageschraube 4 plastisch deformiert werden können. Somit wird nicht nur bevorzugt das Wuchtgewicht 5 sondern auch die Montageschraube 4 mit der Vorrichtung 1 zum Zweck der Erzeugung einer Verliersicherung für die Montageschraube 4 plastisch deformiert.

Das Werkzeug 10 umfasst einerseits ein in das Gewindeelement 3, genauer gesagt in eine Antriebsaufnahme 11 (siehe Figur 2) des Gewindeelements 3, einsteckbares Führungselement 12, so dass das Werkzeug 10 betriebssicher zentrisch vor dem Gewindeelement 3 platziert werden kann, bevor speziell der Gewindesitz 2 durch das Werkzeug 10 plastisch deformiert wird. Da es sich bei dem gezeigten Gewindeelement 3 um eine Montageschraube 4 in Form einer Innensechskant-Madenschraube handelt, ist das Führungselement 12 endseitig mit einem entsprechenden Innensechskanteinsteckteil 13 ausgestattet.

Andererseits umfasst das Werkzeug 10 Deformationsmittel 14 zum plastischen Deformieren zumindest des Gewindesitzes 2. Die Deformationsmittel 14 sind in diesem Ausführungsbeispiel als gehärteter Kronenring 15 ausgeführt, welcher eine Vielzahl an konzentrisch um das Innensechskanteinsteckteil 13 herum angeordneten gehärteten Deformationsspitzen 16 (nur exemplarisch beziffert) bereitstellt.

Das Werkzeug 10 weist einen länglichen, metallischen Tragkörper 17 auf, der sowohl das Führungselement 12 als auch die Deformationsmittel 14 derart trägt, dass das Führungselement 12 gegenüber den Deformationsmitteln 14 relativ verlagerbar an dem Werkzeug 10 gelagert ist.

Der Tragkörper 17 bildet hierbei einen Hohlraum 18 aus, in welchem das Führungselement 12 mittels eines Federelements 19 entlang die Mittellängsachse 20 des Werkzeugs 10 linear verschieblich innerhalb des Tragkörpers 17 gelagert ist.

Insofern wird das Führungselement 12 mit einer gewissen Vorspannkraft permanent nach Außen und in Richtung 21 der Deformationsmittel 14 gedrückt, so dass das Führungselement 12 an der Kopfseite 22 des Werkzeugs 10 im Ruhezustand bis über die Deformationsmittel 14 hinauskragend angeordnet ist. Somit kann das Werkzeug 10 mit seinem Innensechskanteinsteckteil 13 selbst durch eine längere Zugangsbohrung 23 von ca. 600 mm (siehe Figur 2) hindurch in die tief in der Zugangsbohrung 23 liegenden Antriebsaufnahme 11 des Gewindeelements 3 relativ leicht eingefädelt und somit eingesteckt werden, wodurch die Deformationsmittel 14 des Werkzeugs 10 sehr präzise vor dem Gewindesitz 2 und dem Gewindeelement 3 und insbesondere konzentrisch um die Antriebsaufnahme 11 des Gewindeelements 3 herum platziert werden können. Hierdurch ist es möglich, bevorzugt den Gewindesitz 2 im Übergangsbereich zum Gewindeelement 3 und gegebenenfalls auch das Gewindeelement 3 in seinem Randbereich plastisch derart zu deformieren, dass das Gewindeelement 3 verdrehgesichert, aber durch ein Drehwerkzeug (nicht gezeigt) lösbar in dem Gewindesitz 2 festgelegt ist. Hierbei wird lediglich der erste Gang des Gewindes des Gewindesitzes 2 und je nach Ausgestaltung des Gewindeelements 3 auch nur ein Gewindegang des Gewindeelements 3 plastisch deformiert, so dass das Gewindeelement 3 wieder aus seinem Gewindesitz 2 heraus gelöst werden kann.

Damit ein Einfädeln bzw. Einstecken des Führungselements 12 in die Antriebsaufnahme 11 des Gewindeelements 3 unkompliziert funktioniert, ist das Führungselement 12 um die Mittellängsachse 20 des Werkzeugs 10 herum verdrehsicher angeordnet ist. Hierzu weist das Führungselement 12 einen Verdrehsicherungsbolzen 24, der radial von der Mittellängsachse 20 absteht und in eine sich in Richtung der Mittellängsachse 20 des Werkzeugs 10 erstreckende Führungsnut 25 des Tragkörpers 17 hinein ragt und somit axial entlang der Mittellängsachse 20 geführt ist.

Eine Längeneinstellung der Vorrichtung 1 kann konstruktiv einfach mittels eines auswechselbaren Schlagarms 26 erfolgen, welcher hinten am Werkzeug 10 an einer entsprechend am Tragkörper 17 ausgebildeten Aufnahme 27 aufgeschoben werden kann. Die Aufnahme 27 ist somit an einem dem Führungselement 12 abgewandten Ende 28 des Tragkörpers 17, also hinten, angeordnet.

Gemäß der Darstellung nach der Figur 2 ist die ca. 600 mm lange Zugangsbohrung 23 an einer Dampfturbinenanordnung 29 einer Dampfturbine 30 gut zu erkennen. Die Zugangsbohrung 23 führt zu der Position P, an welcher das beispielhaft gezeigte Wuchtelement 5 innerhalb der Dampfturbinenanordnung 29 platziert ist. Der Eingang der Zugangsbohrung 23 kann durch ein Verschlusselement 31 verschlossen werden, nachdem eine Endmontage des Wuchtgewichts 5 erfolgt ist.

Gemäß der in der Figur 3 gezeigten Darstellung der Dampfturbinenanordnung 29 ist das Wuchtgewicht 5 durch die Montageschraube 4 in einer Ringnut 32 eines Dampfturbinenrotors 33 der Dampfturbine 30 bereits festgelegt. Die Montageschraube 4 ist hierbei durch die in der Figur 1 beschriebene Vorrichtung 1 im Gewindesitz 2 des Wuchtgewichts 5 verstemmt. Durch eine entsprechende plastische Deformation des Gewindesitzes 2 des Wuchtgewichts 5 einerseits und gegebenenfalls der Montageschraube 4 andererseits ist eine Verliersicherung erzeugt, so dass sich die Montageschraube 4 unbeabsichtigt nicht in dem Gewindesitz 2 lösen kann. Gut sind die durch die plastische Deformation hervorgerufenen Verstemmkerben 34 am äußeren Rand 35 der Montageschraube 4 und des Wuchtgewichts 5 zu erkennen.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Verfahren zum Sichern eines in einem Gewindesitz (2) eingeschraubten Gewindeelements (3), bei welchem zumindest das in dem Gewindesitz (2) eingeschraubte Gewindeelement (3) zumindest teilweise durch Deformationsmittel (14) eines Werkzeugs (10) derart plastisch deformiert wird, dass es anschließend verdrehgesichert in dem Gewindesitz (2) angeordnet ist,
wobei das Werkzeug (10) axial vor dem Gewindeelement (3) platziert wird, indem ein Führungselement (12) des Werkzeugs (10) in eine Antriebsaufnahme (11) des Gewindeelements (3) axial eingesteckt wird,
wobei die so axial vor dem Gewindeelement (3) platzierten Deformationsmittel (14) in Richtung des Gewindeelements (3) beschleunigt werden, und
wobei sich die Deformationsmittel (14) gegenüber dem in die Antriebsaufnahme (11) eingesteckten Führungselement (12) derart relativ verlagern, dass zumindest der erste dem Werkzeug (10) zugewandte Gewindegang des Gewindeelements (3) und/oder des Gewindesitzes (2) durch die Deformationsmittel (14) deformiert wird, um das Gewindeelement (3) in dem Gewindesitz (2) zu sichern.

2. Verfahren nach Anspruch 1,
wobei das Gewindeelement (3) vor dem Sichern als Montageschraube (4) in ein Wuchtgewicht (5) einer Turbinenanordnung (29) eingeschraubt wird.

3. Verfahren zum Einbauen wenigstens eines Wuchtgewichts (5) einer Turbine,
insbesondere einer Dampfturbine (30),
bei welchem das wenigstens eine Wuchtgewicht (5) mittels eines als Montageschraube (4) ausgestalteten Gewindeelements (3) festgelegt wird,
wobei das Gewindeelement (3) bei einem unter Betriebsbedingungen durchgeführten finalen Wuchtungsprozess mit einem definierten Drehmoment in einem Gewindesitz (2) angezogen wird,
wobei zumindest das in dem Gewindesitz (2) eingeschraubte Gewindeelement (3) zumindest teilweise durch Deformationsmittel (14) eines Werkzeugs (10) derart plastisch deformiert wird, dass es anschließend verdrehgesichert in dem Gewindesitz (2) angeordnet ist,
wobei das Werkzeug (10) axial vor dem Gewindeelement (3) platziert wird, indem ein Führungselement (14) des Werkzeugs (10) in eine Antriebsaufnahme (11) des Gewindeelements (3) axial eingesteckt wird, und
wobei die so axial vor dem Gewindeelement (3) platzierten Deformationsmittel (14) in Richtung des Gewindeelements (3) beschleunigt werden,
wobei sich die Deformationsmittel (14) gegenüber dem in die Antriebsaufnahme (11) eingesteckten Führungselement (11) derart relativ verlagern, dass zumindest der erste dem Werkzeug (10) zugewandte Gewindegang des Gewindeelements (3) und/oder des Gewindesitzes (2) durch die Deformationsmittel (14) deformiert wird, um das Gewindeelement (3) in dem Gewindesitz (2) zu sichern.

4. Verfahren nach einem der Ansprüche 1 bis 3,
wobei das Führungselement (14) in eine Antriebsaufnahme (11) des Gewindeelements (3) derart eingesteckt wird, dass das Deformationsmittel (14) zentrisch gegenüber dem Gewindeelement (3) ausgerichtet ist.

5. Verfahren nach einem der Ansprüche 1 bis 4,
wobei das Werkzeug (10) durch eine Zugangsbohrung (23) einer Turbinenanordnung (29) hindurch bis an das Gewindeelement (3) heran geführt wird, um das Gewindeelement (3) und/oder den Gewindesitz (2) plastisch zu deformieren.

6. Verfahren nach einem der Ansprüche 1 bis 5,
wobei das Gewinde des Gewindeelements (3) und/oder des Gewindesitzes (2) weniger als 25%, vorzugsweise weniger als 20%, plastisch deformiert wird.

7. Vorrichtung (1) zum Sichern eines in einem Gewindesitz (2) eingeschraubten Gewindeelements (3) mit einem Werkzeug (10) zum plastischen Deformieren zumindest des Gewindeelements (3), insbesondere zum Durchführen eines Verfahren nach einem der Ansprüche 1 bis 6,
wobei das Werkzeug (10) einen Tragkörper (17) aufweist, an welchem einerseits ein in das Gewindeelement (3) einsteckbares Führungselement (12) und andererseits Deformationsmittel (14) zum plastischen Deformieren des Gewindeelements (3) und/oder des Gewindesitzes (2) angeordnet sind, und wobei das Führungselement (12) gegenüber den Deformationsmitteln (14) relativ verlagerbar an dem Tragkörper (17) gelagert ist.

8. Vorrichtung (1) nach Anspruch 7,
wobei das Führungselement (12) entlang der Mittellängsachse (20) des Werkzeugs (10) linear verschieblich innerhalb des Tragkörpers (17) gelagert ist.

9. Vorrichtung (1) nach Anspruch 7 oder 8,
wobei das Führungselement (12) kopfseitig des Werkzeugs (10) zumindest temporär über die Deformationsmittel (14) hinausragend angeordnet ist.

10. Vorrichtung (1) nach einem der Ansprüche 7 bis 9,
wobei das Führungselement (12) federvorgespannt innerhalb des Tragkörpers (17) gelagert ist.

11. Vorrichtung (1) nach einem der Ansprüche 7 bis 10,
wobei das Führungselement (12) um die Mittellängsachse (20) des Werkzeugs (10) herum verdrehsicher angeordnet ist.

12. Vorrichtung (1) nach einem der Ansprüche 7 bis 11, wobei an dem Führungselement (12) ein Verdrehsicherungsbolzen (24) angeordnet ist, welcher radial in einer sich in Richtung der Mittellängsachse (20) des Werkzeugs (10) erstreckende Führungsnut (25) des Tragkörpers (17) hineinragend geführt ist.

13. Vorrichtung (1) nach einem der Ansprüche 7 bis 12,
wobei das Führungselement (12) ein Innensechskanteinsteckteil (13) aufweist.

14. Vorrichtung (1) nach einem der Ansprüche 7 bis 13,
wobei die Deformationsmittel (14) eine Vielzahl an konisch ausgestalteten Deformationsspitzen (16) umfassen, welche insbesondere konzentrisch um das Führungselement (12) herum angeordnet sind.

15. Vorrichtung (1) nach einem der Ansprüche 7 bis 14,
wobei das Werkzeug (10) eine Aufnahme (27) für einen Schlagarm (26) aufweist, die an einem dem Führungselement (12) abgewandten Ende (28) des Tragkörpers (17) angeordnet ist.

16. Vorrichtung (1) nach einem der Ansprüche 7 bis 15,
wobei die Vorrichtung (1) längenverstellbar ist, um an unterschiedlich lang ausgestalteten Zugangsbohrungen (23) angepasst zu werden.

17. Turbine,
insbesondere Dampfturbine (30),
mit wenigstens einem umlaufenden und Turbinenschaufeln halternden Rotor (33) und mit Wuchtgewichten (5) zum Wuchten des umlaufenden Rotors (33), bei welcher die Wuchtgewichte (5) mittels einer als Gewindeelement (3) ausgestalteten Montageschraube (4) festgelegt sind, und bei welcher das Gewindeelement (3) in seinem Gewindesitz (2) durch eine Verliersicherung gesichert ist,
wobei die Verliersicherung durch eine plastische Deformation des Gewindeelements (3) und/oder des Gewindesitzes (2) derart erzeugt ist, dass lediglich ein erster Gewindegang des Gewindes des Gewindeelements (3) und/oder des Gewindesitzes (2) plastisch deformiert ist, so dass das Gewindeelement (3) wieder aus seinem Gewindesitz (2) herausgeschraubt werden kann, um das Wuchtgewicht (5) verlagern oder entnehmen zu können.

18. Turbine nach Anspruch 17,
wobei das Gewinde des Gewindeelements (3) und/oder des Gewindesitzes (2) weniger als 25%, vorzugsweise weniger als 20%, durch die plastische Deformation zerstört ist.
